# EUROPÄISCHE PATENTSCHRIFT

(11) **EP 3 292 015 B1**
(45) Veröffentlichungstag und Bekanntmachung des Hinweises auf die Patenterteilung: **27.11.2019**
(21) Anmeldenummer: 16723692.6
(22) Anmeldetag: 06.05.2016
(51) Int. Cl.: B60K 35/00, B60K 37/06, F16H 59/02

(54) **ANZEIGEN- UND BEDIENVORRICHTUNG FÜR EINE FAHRZEUGKOMPONENTE**
DISPLAY AND OPERATING DEVICE FOR A VEHICLE COMPONENT
DISPOSITIF D'AFFICHAGE ET DE COMMANDE POUR UN COMPOSANT DE VÉHICULE

(30) Priorität: 07.05.2015 DE 102015208467
(43) Veröffentlichungstag der Anmeldung: 14.03.2018
(73) Patentinhaber: Behr-Hella Thermocontrol GmbH, 70469 Stuttgart (DE)
(72) Erfinder: VOGT, Frank, 59557 Lippstadt (DE)
(74) Vertreter: dompatent von Kreisler Selting Werner - Partnerschaft von Patent- und Rechtsanwälten mbB
(86) Internationale Anmeldenummer: PCT/EP2016/060179
(87) Internationale Veröffentlichungsnummer: WO 2016/177878

(56) Entgegenhaltungen:
- WO-A1-2009/138145
- WO-A1-2015/069311
- JP-A- 2007 008 246
- US-A1- 2010 214 213

## Beschreibung

Die Erfindung betrifft eine Anzeigen- und Bedienvorrichtung für eine Fahrzeugkomponente, bei der es sich insbesondere um ein Radio, ein CD- und/oder DVD- o.dgl. Audio- und/oder Video-Abspielgerät, ein Navigationsgerät, ein Infotainment-Gerät, ein Heizungs-, Lüftungs- und/oder Klimasteuergerät oder um ein Mensch-Maschine-Interface handelt.

Derartige Anzeigen- und Bedienvorrichtungen werden insbesondere in Mittelkonsolen von Fahrzeugen eingesetzt, um diverse Betriebsparameter von Fahrzeugkomponenten einzugeben sowie um Informationen bezüglich der Fahrzeugkomponenten oder des Fahrzeuges anzuzeigen.

Dabei werden für die Eingabe der Betriebsparameter häufig mechanische Drehsteller, Dreh-/Drücksteller, Gangwahlhebel oder mechanische Tasten eingesetzt. Diese mechanischen Bedienvorrichtungen dienen etwa dazu, die Lautstärke eines Multimedia-Gerätes, die Eingabeparameter eines Navigationsgerätes oder den Gang in einem Fahrzeug einzustellen. Dabei sind die häufig zum Einsatz kommenden mechanischen Bedientasten auch oft mit einer LED-Signalleuchte ausgestattet, welche es ermöglicht, dem Fahrer bestimmte Betriebsparameter anzuzeigen. Dadurch wird dem Fahrer beispielsweise signalisiert, dass die Klimaanlage oder die Heckscheibenheizung eingeschaltet ist.

In WO-A-2009/045671 ist eine Bedienvorrichtung für ein Fahrzeug offenbart. Bei dieser Bedienvorrichtung ist ein Drehsteller inmitten von vier Touchpads angeordnet. Zwischen den einzelnen Touchpads entstehen dadurch offensichtlich Zwischenräume. Sowohl der Drehsteller als auch die einzelnen Touchpads dienen der Bedienung von einzelnen Fahrzeugkomponenten. Weder der Drehsteller, noch die Touchpads sind dazu ausgelegt, Informationen bezüglich der Fahrzeugkomponenten anzuzeigen.

In WO-A-2009/138145 ist eine Bedienvorrichtung für ein Fahrzeug mit einem Schalthebel und einem Display offenbart. Dabei bilden der Schalthebel und das Display zwei separate Einheiten, wodurch zwischen beiden Einheiten offensichtlich Zwischenräume entstehen.

Weitere Bedienvorrichtungen ohne Anzeigefunktion sind in den Druckschriften DE-A-10 2011 108 214, DE-A-10 2004 019 893, DE-A-10 2010 010 574, JP-A-2007 008 246 sowie in DE-A-10 2008 023 231 beschrieben. Darüber hinaus sind in den Druckschriften US-A-2011/0025488 und US-A-2003/0188594 weitere Bedienvorrichtungen offenbart.

Ein häufiges Problem bei bekannten Anzeigen- und Bedienvorrichtungen liegt darin, dass zwischen den mechanischen Bedientasten Zwischenräume vorhanden sind, in die bei Unachtsamkeit des Fahrers oder der Fahrzeuginsassen beim Verzehr von Genussnahrungs- und/oder Lebensmitteln im Fahrzeug Speisereste oder Flüssigkeit eindringen können. Bekanntermaßen nimmt der Verzehr von Speisen und Getränken, insbesondere auf langen Fahrtstrecken, immer mehr zu, so dass auch die meisten Fahrzeuge heutzutage mit Getränkehaltern ausgestattet sind. Beim Verzehr von Speisen und Getränken kann dann durch eine kurze Unaufmerksamkeit oder auch durch Unebenheiten oder Störungen der befahrenen Straße leicht Flüssigkeit in die Bedientasten-Zwischenräume gelangen, mit der Gefahr der Beschädigung oder Zerstörung der darunter liegenden Elektronik.

Der Erfindung liegt daher die Aufgabe zugrunde, eine Anzeigen- und Bedienvorrichtung zu schaffen, welche gänzlich ohne Bedientasten-Zwischenräume auskommt, so dass das Eindringen von Flüssigkeiten oder Speisen in die Anzeigen- und Bedienvorrichtung und eine dadurch verursachte Beschädigung oder Zerstörung dieser Vorrichtung ausgeschlossen oder zumindest deutlich erschwert wird.

Zur Lösung dieser Aufgabe wird mit der Erfindung eine Anzeigen- und Bedienvorrichtung für mindestens eine Fahrzeugkomponente, bei der es sich insbesondere um ein Radio, eine CD- und/oder DVD- o.dgl. Audio- und/oder Video-Abspielgerät, ein Navigationsgerät, ein Infotainment-Gerät, ein Heizungs-, Lüftungs- und/oder Klimasteuergerät oder um ein Mensch-Maschine-Interface handelt, vorgeschlagen, wobei die Anzeigen- und Bedienvorrichtung versehen ist mit den Merkmalen des Anspruch 1. Einzelne Ausgestaltungen der Erfindung sind Gegenstand der Unteransprüche.

Weiterhin wird zur Lösung der Aufgabe eine Fahrzeugmittelkonsole mit einer Anzeigen- und Bedienvorrichtung nach Anspruch 6 sowie ein Fahrzeug mit einer Anzeigen- und Bedienvorrichtung oder einer Mittelkonsole mit einer Anzeigen- und Bedienvorrichtung nach Anspruch 7 vorgeschlagen.

Durch den Einsatz eines Touchscreens mit geschlossener Bedienfläche statt mechanischer Bedientasten weist die erfindungsgemäße Anzeigen- und Bedienvorrichtung keinerlei Bedientastenzwischenräume auf. Bei einem Touchscreen handelt es sich um einen berührungsempfindlichen Bildschirm, der sowohl als Eingabe- als auch als Ausgabegerät dient. Damit unterscheidet sich ein Touchscreen etwa von einem Touchpad, das lediglich als Eingabegerät fungiert und über keine Anzeigefunktion verfügt. Als Touchscreen können beispielsweise LCD-Displays verwendet werden, wie sie in Smartphones und Tablets eingesetzt werden. Auch kommt hierfür der Einsatz gekrümmter Touchscreens in Frage, die bezüglich ihrer Form auf die Kontur einer Fahrzeug-Mittelkonsole angepasst sind oder aber auch flexible Touchscreens, die sich beispielsweise an die Form einer Mittelkonsole anpassen können. Bei der erfindungsgemäßen Anzeigen- und Bedienvorrichtung bietet der Touchscreen die Möglichkeit, Bedientasten anzuzeigen, die Eingabe eines Benutzers aufzunehmen und an die entsprechende Fahrzeugkomponente weiterzuleiten, oder aber auch Informationen einer oder mehrerer Fahrzeugkomponenten anzuzeigen. Auch ist es möglich, dass verschiedene Bereiche des Touchscreens unterschiedliche Aufgaben erfüllen. Darüber hinaus sind die Bedientasten frei programmierbar, so dass die erfindungsgemäße Anzeigen- und Bedienvorrichtung in unterschiedlichen Fahrzeugen mit verschiedenen Fahrzeugkomponenten verwendet werden kann, ohne dass eine Anpassung der Hardware notwendig wäre.

Nach der Erfindung ist das mechanische Bedienelement als Gangwahlhebel ausgeführt. Über virtuelle Bedientasten des Touchscreens können Einstellungen bezüglich eines Audio-Abspielgerätes oder Fahrwerks-Einstellungen vorgenommen werden.

Weiterhin erstreckt sich in einer bevorzugten Ausgestaltung der erfindungsgemäßen Anzeigen- und Bedienvorrichtung der Touchscreen ringförmig um die Aussparung herum. Bei dieser Ausgestaltungsform werden die Bedientasten ringförmig um das mechanische Bedienelement angeordnet, so dass sie sich in unmittelbarer Nähe zu diesem mechanischen Bedienelement befinden. Durch die Anordnung der Bedientasten in unmittelbarer Nähe zum mechanischen Bedienelement erhält der Fahrer eine verbesserte Zugänglichkeit aller für die Bedienung der Fahrzeugkomponenten relevanten Elemente.

In einer weiteren bevorzugten Ausgestaltung der Erfindung ist die Aussparung des Touchscreens als Randaussparung ausgebildet. Dadurch ist der Touchscreen beispielsweise U-förmig oder L-förmig ausgeführt. Dies kann etwa dann vorteilhaft sein, wenn es gewünscht ist, den Bereich, der sich in unmittelbarer Nähe zum Fahrer befindet, für die Anzeige der Tasten sowie für die Eingabe vorzusehen und den Bereich, der vom Benutzer weiter weg liegt und daher weniger gut zu erreichen ist, nicht mit Bedientasten oder Anzeigeelementen zu versehen.

Auch kann in einer weiteren Ausführungsform der Erfindung der Touchscreen dazu ausgelegt sein, ein mechanisches, akustisches oder optisches Feedback bei einer taktilen Eingabe auszugeben. Das mechanische Feedback kann beispielsweise in Form einer Vibration erfolgen, die den Benutzer darauf aufmerksam macht, dass die Anzeigen- und Bedienvorrichtung eine Eingabe erfasst hat. Auch kann der Benutzer durch ein akustisches Signal auf die erfolgte Eingabe aufmerksam gemacht werden oder er kann beispielsweise gewarnt werden, wenn die eingestellten Betriebsparameter in einem kritischen Bereich liegen. Auf ähnliche Weise können optische Signale ausgegeben werden, wie etwa eine blinkende Anzeige, die den Benutzer vor einer Gefahr warnen kann. Das ausgegebene Feedback dient dabei dazu, dass der Fahrer seine Aufmerksamkeit nicht von der Straße lenken muss, um die Anzeigen- und Bedienvorrichtung zu bedienen.

Schließlich kann vorgesehen sein, dass der Touchscreen dazu ausgelegt ist, bei Berührung des mechanischen Bedienelements ein definiertes Auswahlmenü anzuzeigen. Dabei kann beispielsweise vorgesehen sein, dass das mechanische Bedienelement als Gangwahlhebel ausgeführt ist und dass bei Berührung des Gangwahlhebels auf dem Touchscreen die Auswahlmöglichkeiten für den Gang angezeigt werden.

Die Erfindung wird nachfolgend anhand eines Ausführungsbeispiels unter Bezugnahme auf die Zeichnung näher erläutert. Im Einzelnen zeigt dabei:

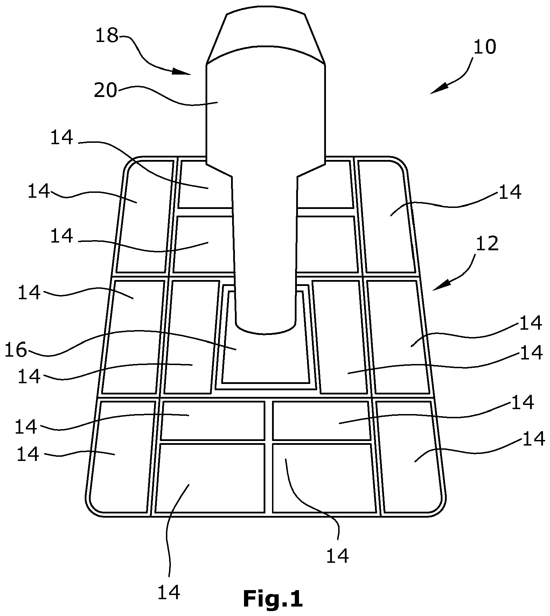

- Fig. 1: eine perspektivische Ansicht eines Ausführungsbeispiels der Anzeigen- und Bedienvorrichtung.

In der Fig. 1 ist eine Anzeigen- und Bedienvorrichtung 10 gezeigt, die einen Touchscreen 12 mit einer Vielzahl von Bedientastenfeldern, nachfolgend Bedientasten 14 genannt, aufweist. Der Touchscreen 12 zeigt weiterhin eine mittig angeordnete Aussparung 16, in der ein mechanisches Bedienelement 18 angeordnet ist. In diesem Ausführungsbeispiel ist das mechanische Bedienelement 18 als Gangwahlhebel 20 ausgeführt. Eine derartige Anzeigen- und Bedienvorrichtung 10 kann typischerweise in einer Fahrzeug-Mittelkonsole eingesetzt werden, so dass der Fahrer die Gangwahl mechanisch vornimmt und weitere Komponenten des Fahrzeugs mittels der verschiedenen Bedientasten 14 vornehmen kann. Welche Fahrzeugkomponenten in welchem Umfang durch die Anzeigen- und Bedienvorrichtung eingestellt werden, kann dabei nach Belieben programmiert werden, so dass die Anzeigen- und Bedienvorrichtung 10 unabhängig von der Fahrzeugausstattung gefertigt werden kann. Abhängig von der besagten Fahrzeugausstattung kann dann durch eine Anpassung der Anzeigen- und Bedienvorrichtungssoftware bestimmt werden, welche Fahrzeugkomponenten in welchem Maße angesteuert werden können und welche Betriebsparameter durch die Anzeigen- und Bedienvorrichtung 10 zu erfassen sind. Auch kann somit durch eine Anpassung der Software die Anzahl der angezeigten Bedientasten 14 sowie die Größe dieser Bedientasten 14 nach Belieben eingestellt werden. Auch können eine oder mehrere der virtuellen Bedientasten 14 auf einfache Weise ersetzt werden durch Anzeigebereiche, welche keine Eingabe des Benutzers aufnehmen, sondern nur Informationen bezüglich einer oder mehrerer Fahrzeugkomponenten bzw. allgemeine Betriebsinformationen, wie beispielsweise die aktuelle Fahrzeuggeschwindigkeit, den Kraftstoffverbrauch oder die Innenraumtemperatur ausgeben können.

Ferner ist zu erkennen, dass zwischen den durch den Touchscreen 12 dargestellten Bedientasten 14 keine Zwischenräume vorhanden sind, so dass die Anzeigen- und Bedienvorrichtungen 10 aus den Ausführungsbeispielen jeweils vor einem Eindringen von Flüssigkeit oder Speisen geschützt sind.

### BEZUGSZEICHENLISTE

- 10: Anzeigen- und Bedienvorrichtung
- 12: Touchscreen
- 14: Bedientasten
- 16: Aussparung
- 18: mechanisches Bedienelement
- 20: Gangwahlhebel

## Patentansprüche

1. Anzeigen- und Bedienvorrichtung (10) für mindestens eine Fahrzeugkomponente, bei der es sich insbesondere um ein Radio, ein CD- und/oder DVD- o.dgl. Audio- und/oder Video-Abspielgerät, ein Navigationsgerät, ein Infotainment-Gerät, ein Heizungs-, Lüftungs- und/oder Klimasteuergerät oder um ein Mensch-Maschine-Interface handelt, mit
- einem Gangwahlhebel (20) zur Vorgabe eines Betriebsparameters mindestens einer ersten Fahrzeugkomponente, und
- einem Touchscreen (12) zur Ausgabe von Informationen, zur Darstellung von Bedientasten (14) und/oder zur Eingabe von weiteren Betriebsparametern für die erste Fahrzeugkomponente und/oder für mindestens eine zweite Fahrzeugkomponente,
**dadurch gekennzeichnet, dass**
- der Touchscreen (12) eine Aussparung (16) aufweist und
- der Gangwahlhebel (20) in der Aussparung (16) des Touchscreens (12) angeordnet ist.

2. Anzeigen- und Bedienvorrichtung nach Anspruch 1, **dadurch gekennzeichnet, dass** sich der Touchscreen (12) ringförmig um die Aussparung (16) herum erstreckt.

3. Anzeigen- und Bedienvorrichtung nach Anspruch 1 oder 2, **dadurch gekennzeichnet, dass** die Aussparung (16) des Touchscreens (12) als Randaussparung ausgebildet ist.

4. Anzeigen- und Bedienvorrichtung nach einem der Ansprüche 1 bis 3, **dadurch gekennzeichnet, dass** der Touchscreen (12) dazu ausgelegt ist, ein mechanisches, akustisches oder optisches Feedback bei einer taktilen Eingabe auszugeben.

5. Anzeigen- und Bedienvorrichtung nach einem der Ansprüche 1 bis 4, **dadurch gekennzeichnet, dass** der Touchscreen (12) eine in sich geschlossene Oberfläche aufweist.

6. Mittelkonsole für ein Fahrzeug mit einer Anzeigen- und Bedienvorrichtung (10) nach einem der Ansprüche 1 bis 5.

7. Fahrzeug mit einer Anzeigen- und Bedienvorrichtung (10) nach einem der Ansprüche 1 bis 5 oder mit einer Mittelkonsole nach Anspruch 6.

## Claims

1. A display and operating device (10) for at least one vehicle component which is in particular a radio, a CD and/or DVD player or similar audio and/or video player, a navigation device, an infotainment device, a heating, ventilating and/or air conditioning control unit or a human-machine interface, having
- a gear selector lever (20) for setting an operational parameter of at least one first vehicle component, and
- a touch screen (12) for outputting information, for displaying control keys (14) and/or for inputting further operational parameters for said first vehicle component and/or for at least one second vehicle component,
**characterized in that**
- said touch screen (12) comprises a recess (16), and
- said gear selector lever (20) is arranged in said recess (16) of said touch screen (12).

2. The display and operating device according to claim 1, **characterized in that** the touch screen (12) annularly extends around the recess (16).

3. The display and operating device according to claims 1 or 2, **characterized in that** the recess (16') of the touch screen (12) is configured as an edge recess.

4. The display and operating device according to any one of claims 1 to 3, **characterized in that** the touch screen (12) is designed for outputting a mechanical, acoustical or optical feedback upon a tactile input.

5. The display and operating device according to any one of claims 1 to 4, **characterized in that** the touch screen (12') comprises a surface closed in itself.

6. A center console for a vehicle having a display and operating device (10) according to any one of claims 1 to 5.

7. A vehicle having a display and operating device (10) according to any one of claims 1 to 5 or having a center console according to claim 6.

## Revendications

1. Dispositif d'affichage et de commande (10) pour au moins un composant de véhicule, s'agissant en particulier d'une radio, d'un lecteur CD et/ou DVD ou d'un lecteur audio et/ou vidéo, d'un système de navigation, d'un système d'info-divertissement, d'un système de chauffage, de ventilation et/ou de climatisation ou d'une interface homme-machine, doté
- d'un levier de changement de vitesse (20) pour spécifier un paramètre opérationnel d'au moins un premier composant de véhicule, et
- d'un écran tactile (12) pour la fourniture d'information, pour la représentation de touches de commande (14) et/ou pour la saisie de paramètres opérationnels supplémentaires pour le premier composant de véhicule et/ou pour au moins un deuxième composant de véhicule,
**caractérisé en ce que**
- l'écran tactile (12) comporte une cavité (16) et
- le levier de changement de vitesse (20) est agencé dans la cavité (16) de l'écran tactile (12).

2. Dispositif d'affichage et de commande selon la revendication 1, **caractérisé en ce que** l'écran tactile (12) s'étend de manière annulaire autour de la cavité (16) .

3. Dispositif d'affichage et de commande selon la revendication 1 ou 2, **caractérisé en ce que** la cavité (16) de l'écran tactile (12) est réalisée comme cavité marginale.

4. Dispositif d'affichage et de commande selon l'une des revendications 1 à 3, **caractérisé en ce que** l'écran tactile (12) est disposé de façon à fournir une rétroaction mécanique, acoustique ou optique lors d'une saisie tactile.

5. Dispositif d'affichage et de commande selon l'une des revendications 1 à 4, **caractérisé en ce que** l'écran tactile (12) comporte une surface fermée sur elle-même.

6. Console centrale pour un véhicule dotée d'un dispositif d'affichage et de commande (10) selon l'une des revendications 1 à 5.

7. Véhicule doté d'un dispositif d'affichage et de commande (10) selon l'une des revendications 1 à 5 ou doté d'une console centrale selon la revendication 6.
